# EUROPEAN PATENT SPECIFICATION

(11) **EP 3 368 351 B1**
(45) Date of publication and mention of the grant of the patent: **18.12.2019**
(21) Application number: 16791277.3
(22) Date of filing: 28.10.2016
(51) Int. Cl.: B60C 11/12, B60C 11/03, B29D 30/06

(54) **TWISTED SIPES**
VERDRILLTE LAMELLEN
LAMELLES TORSADÉES

(30) Priority: 30.10.2015 WO PCT/US2015/058439
(43) Date of publication of application: 05.09.2018
(73) Proprietor: Compagnie Générale des Etablissements Michelin, 63000 Clermont-Ferrand (FR)
(72) Inventor: COLLETT, Mark, Greenville, South Carolina 29605 (US); HOTTEBART, Francois, Greenville, South Carolina 29605 (US); NEAU, Xavier, Greenville, South Carolina 29605 (US); WHITE, Timothy, Greenville, South Carolina 29605 (US)
(74) Representative: Casalonga
(86) International application number: PCT/US2016/059471
(87) International publication number: WO 2017/075455

(56) References cited:
- EP-A1- 1 072 445
- EP-A2- 0 963 864
- WO-A1-96/01190
- WO-A1-2015/003827
- JP-A- H0 994 829
- JP-A- H02 241 806
- US-A- 4 566 514
- US-A1- 2013 186 534

## Description

### CROSS-REFERENCE TO RELATED APPLICATIONS

This application claims priority to, and the benefit of, International Patent Application No. PCT/US2015/058439 filed on October 30, 2015 with the U.S. Patent Office (as the US Receiving Office).

### BACKGROUND OF THE INVENTION

### Field of the Invention

This invention relates generally to tire treads, and more particularly, to tire treads having sipes, where at least a portion of the sipe is twisted so as to create varying angles of inclination throughout the tire tread block.

### Description of the Related Art

The present invention relates to a tire tread according to the preamble of claim 1, such as it is, e.g.,known from EP0963864 A2, US2013/186534 A1 , US4566514 A, EP1072445 A1 or WO96/01190 A1.

Tire treads are known to include a pattern of voids and/or discontinuities such arranged along a ground-engaging side of the tread to provide sufficient traction and handling during particular conditions. For example, grooves provide voids into which water, mud, or other environmental materials may be diverted to better allow the tread surface to engage a ground surface. By providing the pattern of voids/discontinuities, tread elements are formed along the tread, where the outer portion of said elements are arranged along the outer side of the tread to provide traction as the outer side engages the ground surface (that is, a surface upon with the tire operates, which is also referred to herein as a tire operating surface).

It is well known that the tire tread wears during tire operation due to the generation of slip between the outer side of the tread and the tire operating surface. This not only occurs when the rolling direction of the tire is biased relative to the direction of vehicle travel to generate lateral traction forces, such as when a vehicle is changing direction during turning or cornering maneuvers, but also when the vehicle is traveling in a straight line.

In certain instances, it is advantageous to employ sipes, which are narrow voids or slits that generally close at some instance within a tire's footprint, which is the area of contact between the tire and the tire operating surface. For example, sipes can offer benefits in traction, such as in snow. Sipes, however, can reduce the stiffness of a tire tread, resulting in undesired tread wear. Therefore, there is a need to reduce the occurrence of wear when employing the use of sipes in tire treads, in particular by providing sipes which facilitate increased interlocking between tire tread blocks.

### SUMMARY OF THE INVENTION

The present invention includes tire treads, tires including the tire treads, and methods of forming a tire tread. In particular embodiments, an inventive tire tread comprises: a length extending in a lengthwise direction, the lengthwise direction being a circumferential direction when the tread is arranged on a tire; a width extending in a lateral direction, the lateral direction being perpendicular to the lengthwise direction; and, a thickness extending in a depthwise direction from an outer, ground-engaging side of the tread, the depthwise direction being perpendicular to both the lengthwise direction and the widthwise direction of the tread. The inventive treads further include a sipe having a length, a height, a width, a thickness extending in a direction of the sipe width, and a cross-section taken along a plane extending in a direction of the sipe width and height, where the cross-section twists as the sipe thickness extends along the length of the sipe.

Particular embodiments of the inventive method of forming the tire tread comprises molding into the tread a sipe as recited herein.

The foregoing and other embodiments, objects, features, and advantages of the invention will be apparent from the following more detailed descriptions of particular embodiments of the invention, as illustrated in the accompanying drawings wherein like reference numbers represent like parts of the invention.

### DETAILED DESCRIPTION OF THE DRAWINGS

FIG. **1** is a partial perspective view of a tire tread showing a plurality of tread blocks separated by lateral and longitudinal grooves, where the tread blocks include one or more sipes, in accordance with an embodiment of the invention.
FIG. **2** is a top view of a sipe, in accordance with an embodiment of the invention.
FIG. **3** is a sectional view of the sipe shown in FIG. **2** taken along line **3-3.**
FIG. **4** is a perspective view of a sipe-molding member, in accordance with an embodiment of the invention.
FIG. **5** is a sectional view of a sipe formed by the sipe-molding member of FIG. **4**, taken along line **5-5.**
FIG. **6** is section view of the sipe of FIG. **5** in an alternative embodiment having a submerged void, in accordance with another embodiment of the invention.

### DETAILED DESCRIPTION OF PARTICULAR EMBODIMENTS

The present invention includes methods for forming a tire tread, tire treads, and tires including said treads, where any such tread includes one or more sipes having a length, a height, a width, a thickness extending in a direction of the sipe width, and a cross-section taken along a plane extending in a direction of the sipe width and height, where the cross-section twists as the sipe thickness extends along the length of the sipe. In providing one or more sipes, it is understood that one sipe or a plurality of sipes may be provided in any tread. By virtue of employing such treads, an increased rigidity in the contact patch is a result of an increase in interlocking between tire tread blocks, which when coupled with a lower rigidity at the exit of the contact patch, results in reduced tread wear while also continuing to obtain tire/vehicle performance benefits commonly achieved utilizing one or more of such sipes.

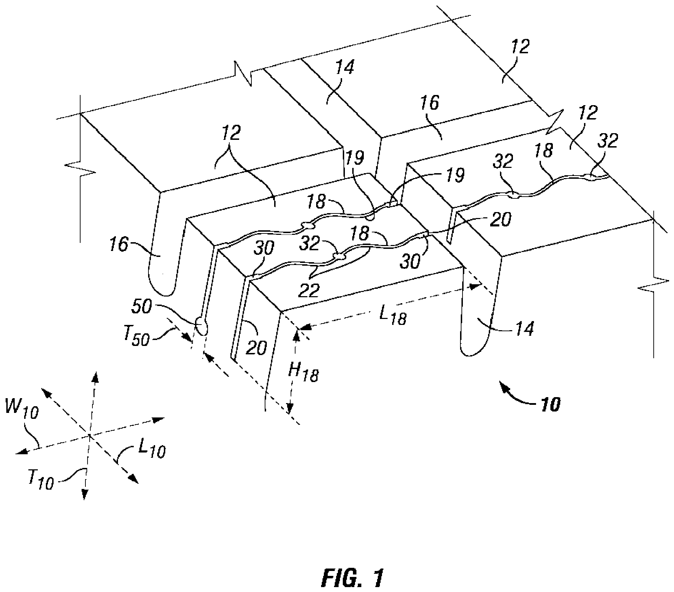

With regard to the tire treads described herein, having already the noted one or more sipes, it is appreciated that each such tread includes a length, width, and thickness. The length extends in a lengthwise direction. As the tread may be formed with the tire, or separately for later installation on the tire, such as during retreading operations, for example, the lengthwise direction of the tread is a circumferential (that is, annular) direction when the tread is arranged on a tire. The width extends in a lateral direction, the lateral direction being perpendicular to the lengthwise direction, while the thickness extends in a depthwise direction from an outer, ground-engaging side of the tread, the depthwise direction being perpendicular to both the lengthwise direction and the widthwise direction of the tread. By way of example, an exemplary tire tread is partially shown in FIG. **1**, where tire tread **10** includes a plurality of tread blocks **12** separated by longitudinal grooves **14** and lateral grooves **16**. The tire tread extends in directions of the tread length **L₁₀**, tread width **W₁₀**, and tread thickness **T₁₀**. Each tread block **12** includes one or more sipes **18** each having a length **L₁₈** extending at least partially in a direction of the tread width **W₁₀**, a height **H₁₈** extending at least partially in a direction of the tread depth **T₁₀** and perpendicular to the tread length **L₁₀**, and a thickness **T₁₈**. As best seen in FIG. **1****,** each sipe **18** is arranged between opposing sides or surfaces **19** of the tread within the tread thickness **T₁₀**.

With specific regard to the sipes, as noted above, particular embodiments of such tire treads include a sipe having a length, a height, a width, and a thickness, each of which extend in a direction perpendicular to the other. The sipe thickness extends in a direction of the sipe width. A cross-section of the sipe, taken along a plane extending in a direction of the sipe width and height, twists as the sipe thickness extends along the length of the sipe. In twisting as the sipe thickness extends along the length of the sipe, the sipe cross-section rotates about a twisting axis, in a direction of the sipe width as the sipe thickness extends along the length of the sipe. The twisting of the cross-section along the length of the sipe may also be described as the sipe cross-section having a centerline, the centerline extending at least partially in the direction of the sipe height and along the cross-section to define a neutral axis (a neutral bending axis) for the cross-section or to separate the cross-section into two equal areas, such that the sipe cross-section and its centerline rotate about a rotational axis (twisting axis) back and forth by a range of angles measured relative to a reference line extending in the direction of the tread thickness (that is, substantially or fully in the direction of the sipe height, wherein said direction is perpendicular to both the directions of the tread length and width). Stated differently, in taking different cross-sections along the length of the sipe, the different cross-sections each having a centerline as described above, where the different cross-section centerlines are twisted relative to each other by an angle (also referred to as an inclination angle). For example, in certain instances, the sipe twists back and forth one or more times, by a range of angles from zero degrees (0°) to at least eighteen degrees (18°). By virtue of providing a sipe having such features, increased interlocking of tire tread block is achieved, resulting in improved tire wear. It is appreciated that in other examples, the range of angles extends from zero degrees up to 20 to 30 degrees (20° to 30°), although greater angles are contemplated. It is appreciated that the cross-section is associated with a sipe-forming portion of the sipe-forming member. In particular embodiments, for example, the cross-section is associated with an intermediate sipe portion (discussed further below), which is configured to form a portion of the sipe having a thickness equal to or less than 1.0 mm or less, 0.4 mm or less, or 0.2 mm or less, in certain embodiments.

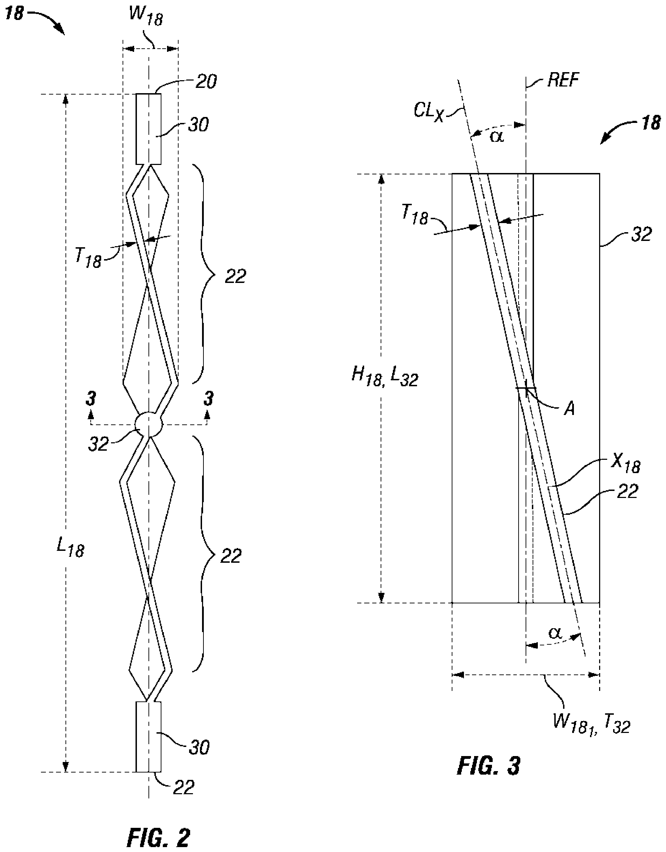

With reference to FIGS. **2** and **3**, one embodiment of a sipe **18** is shown in top and sectional views, respectively. In particular, sipe **18** is shown to have a thickness **T₁₈** extending in the direction of the length **L₁₈** and height **H₁₈** of the sipe. With specific reference to FIG. **3**, sipe **18** has a cross-section **X₁₈** taken along a plane extending in a direction of the sipe width and height, this plane being represented by section line **3-3** in FIG. **2****.** This cross-section forms a portion of a sipe thickness (less than 1.0 mm, 0.4 mm, or 0.2 mm, for example), and is more specifically taken in the intermediate sipe portion **22.** As can be seen in both figures, sipe thickness **T₁₈** and cross-section **X₁₈** together twist back and forth as each extends along sipe length **L₁₈**, the twist occurring across any desired of a range of angles (**α**) measured from a centerline **CLₓ** of the cross-section and to a reference line **REF** extending in the direction of the sipe height **H₁₈** (that is, substantially or fully in the direction of the sipe height). The twisting of sipe **18** occurs as the cross-section **X₁₈** rotates back and forth about the rotational axis **A**, creating varying angles of sipe inclination (**α**) between the reference line **REF** and the centerline **CLₓ** as sipe **18** twists along sipe length **L₁₈**. In each of the embodiments shown, the cross-section is configured to form a portion of the sipe having a thickness equal to or less than 1.0 mm or less, 0.4 mm or less, or 0.2 mm or less, in an intermediate sipe portion (discussed further below)

In particular embodiments, the sipe may have variable thickness across one or more of its length and height, such features permitting the manufacture and use of sipes with thinner thicknesses and sipe-molding elements with improved strength and stiffness for improved durability. In one embodiment, the sipe has a length defined by two distal ends, where at least one of the distal ends includes an upright void feature having a length extending primarily in the direction of the sipe height, where the sipe thickness between the distal ends includes an intermediate sipe portion, the upright void feature having a thickness greater than the intermediate sipe portion. In extending primarily in a direction of the sipe height, when separating the average direction of extension into vectors extending in the direction of the sipe length, depth, and width, the vector extending in the direction of the sipe height is greatest among the different vectors. It is appreciated that any upright void feature may have any thickness, such as being at least 0.4 mm thick or at least 1.0 mm thick. In certain embodiments, for example, the at least one upright void feature is at least 0.4 mm thick and the intermediate sipe portion is less than 0.4 mm. In other exemplary embodiments, the sipe has an upright void feature that is at least 0.4 mm thick and an intermediate sipe portion which is 0.2 mm thick or less. In certain variations, an upright void feature is at least 1.2 mm thick. It is appreciated that a sipe may have one or more upright void features of identical length and thickness, and may comprise various combinations of different shapes, thicknesses and/or lengths, which may be continuous or discontinuous and extend along any linear or non-linear path. A non-linear path may comprise an arcuate path or an undulating path which may be curvilinear or formed of a plurality of linear segments, such as a zig-zag path. In certain embodiments, one or more upright void features are arranged between the distal ends and along the intermediate sipe portion, which are referred to as intermediate upright void features, each of the one or more intermediate upright void features having a thickness greater than the intermediate sipe portion, such as any thickness contemplated above with reference to the upright void features arranged at the distal ends.

For example, with reference to FIGS. **1** and **2**, sipes **18** have a length **L₁₈** defined by distal ends **20** and an intermediate sipe portion **22.** In the embodiment shown, each of the distal ends **20** including an upright void feature **30** with a length extending primarily in the direction of the sipe height **H₁₈**. Each upright void feature **30** has a thickness **T₃₂** that is greater than a thickness **T₁₈** of the sipe, and more particularly, of the intermediate sipe portion **22.** It is appreciated that any upright void feature may have a variable thickness, where, in certain instances, at least a portion thereof may be as thick as the intermediate sipe portion at a certain location along the length of the upright void feature, even though the upright void feature has a thickness greater than the thickness of the intermediate sipe portion at another location along the upright void feature length. The sipe **18** shown in FIGS. **1** and **2** also includes an intermediate upright void feature **32** arranged along intermediate sipe portion **22**, the intermediate upright void feature having a thickness **T₃₂** greater than the thickness **T₁₈** of the sipe, and more specifically, of the intermediate sipe portion **22.** Sipe **18** may have more than one intermediate upright void features **32**, as shown by example in FIG. **1**, where certain sipes include two (2) intermediate upright void features. Upright void features **30**, **32**, whether utilized in combination or standing alone, provide additional strength and stiffness to a corresponding sipe-molding member, and in turn permit the manufacture and use of sipes with thinner thicknesses in along the intermediate sipe portion.

It is appreciated that the cross-section of the sipe, such as in the intermediate sipe portion, may form any shape. For example, the cross-section may be symmetrical or asymmetrical relative the centerline. By further example, the cross-section may have constant or variable thickness. In yet further example, the thickness of the cross-section may extend along any linear or non-linear path. A non-linear path may comprise an arcuate path or an undulating path which may be curvilinear or formed of a plurality of linear segments, such as a zig-zag path. For example, in particular embodiments, the sipe-molding member is configured to form one or more undulations within the sipe, whereby the thickness of the sipe, and therefore the thickness of the sipe-molding member, undulates back and forth in a direction of the sipe width or thickness as the sipe extends in a direction of the sipe height and/or length in forming one or more undulations. This undulating connotes the location of the sipe thickness along an undulating, non-linear path, where the path undulates back and forth in a direction of the sipe width or thickness as the path extends in a direction of the sipe height and/or length. Undulating does not connote a variable thickness of the sipe or sipe-molding portion in the sipe molding member, although the thickness of the sipe may vary with or without the sipe thickness undulating. Therefore, it is clear that said undulations form a portion of the cross-section, and also twist as the sipe thickness extends along the length of the sipe. In certain embodiments, the thickness undulating back and forth is interrupted by an intermediate upright void feature as more fully discussed above. In some embodiments, the undulations are situated entirely within the intermediate sipe portion, while in other versions the undulations extend partially into, or entirely through, the length of the upright void features. In certain embodiments, any sipe includes a submerged groove arranged along a bottom of the sipe, the submerged groove having a length extending in the direction of the sipe length.

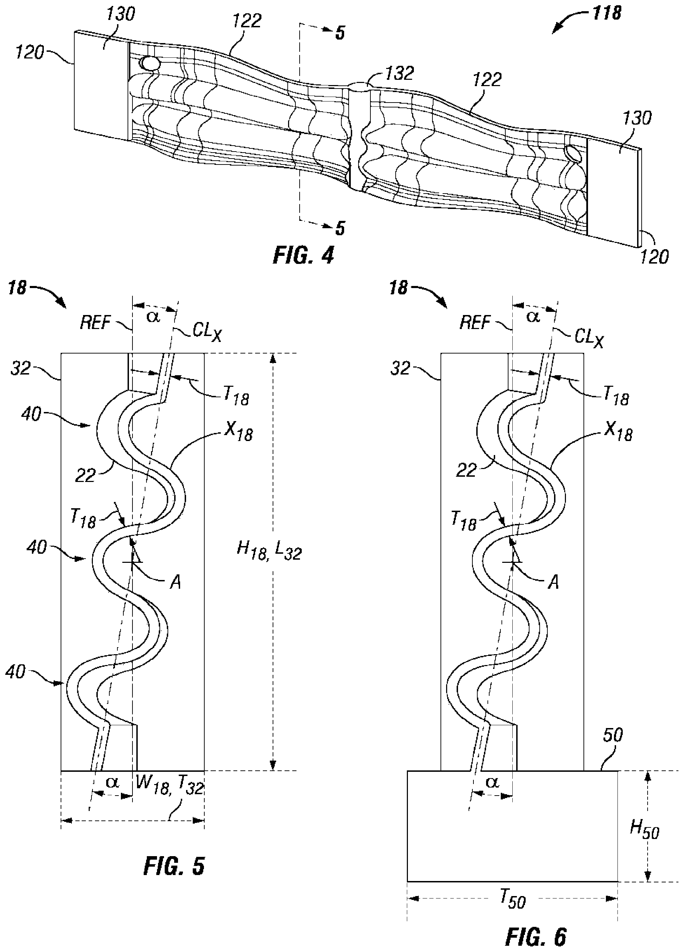

By way of example, with reference to the exemplary embodiment of FIG. **5**, cross-section **X₁₈** is shown to have a thickness **T₁₈** that undulates back and forth in a direction of the sipe thickness **T₁₈** and width **W₁₈** as sipe **18** extends in a direction of the sipe height **H₁₈** to form a plurality of undulations **40.** The thickness can be described as extending along an undulating path. It is appreciated that this sipe may extend additionally along another undulating path in the direction of the sipe length. This undulating thickness occurs while the cross-section **X₁₈** and its centerline **CLₓ** also twists back and forth about axis **A.**

The submerged groove is a groove spaced apart or offset from the ground-engaging surface of a new tread in a direction of the tread thickness, which may be later exposed when a sufficient amount of tread thickness has been worn or removed. The submerged groove may form any shape, and extend lengthwise in any linear or non-linear path. It is also appreciated that the submerged groove may be formed to have any thickness. In certain embodiments, the submerged groove has a thickness greater than the thickness of any upright void feature and intermediate void feature. By way of example, with reference to the exemplary embodiment shown in FIG. **6**, the sipe of FIG. **5** has been modified in this embodiment to include a submerged groove **50.** A submerged groove **50** is also shown in FIG. **1****.** In FIG. **6**, submerged groove **50** is shown to have a height **H₅₀** and a thickness **T₅₀**, which is shown to extend along a non-linear path in a direction of the sipe length.

It is appreciated that any one or a plurality of the sipes described herein may be molded into a tire tread in a method of forming a tire tread using a like sipe-molding member. In the method, a tire tread has a length, a width, and a thickness as described above. In particular embodiments, the method comprising the step of molding into the tread a sipe and a void feature of any variation described herein. As noted above, a sipe-molding member may take the form of the void to be formed in the tread, such as shown in various exemplary embodiments in the figures. An exemplary sipe-molding element **118** for molding a corresponding sipe of the same shape is shown in FIG. **4**, the element having a length defined by distal end-forming features **120** for forming corresponding distal ends of the formed sipe, intermediate sipe portion-forming features **122** for forming corresponding intermediate sipe portions of the formed sipe, upright void-forming features **130** for forming corresponding upright void features **30** of the formed sipe, an intermediate upright void-forming feature **132** for forming corresponding an intermediate upright void feature **32** of the formed sipe. It is appreciated that a sipe-molding element may include other features corresponding to any desired portion of a sipe described herein.

It is appreciated that any tread discussed herein may be arranged along an annular pneumatic tire, or may be formed separately from a tire as a tire component for later installation on a tire carcass, in accordance with any technique or process known to one of ordinary skill in the art. For example, the treads discussed and referenced herein may be molded with a new, original tire, or may be formed as a retread for later installation upon a used tire carcass during retreading operations. Therefore, when referencing the tire tread, a longitudinal direction of the tire tread is synonymous with a circumferential direction of the tire when the tread is installed on a tire. Likewise, a direction of the tread width is synonymous with an axial direction of the tire or a direction of the tire width when the tread is installed on a tire. Finally, a direction of the tread thickness is synonymous with a radial direction of the tire when the tread is installed on a tire. It is understood that the inventive tread may be employed by any known tire, which may comprise a pneumatic or non-pneumatic tire, for example.

It is appreciated that any of the tread features discussed herein may be formed into a tire tread by any desired method, which may comprise any manual or automated process. For example, the treads may be molded, where any or all discontinuities therein may be molded with the tread or later cut into the tread using any manual or automated process. It is also appreciated that any one or both of the pair of opposing discontinuities may be originally formed along, and in fluid communication with, the outer, ground-engaging side of the tread, or may be submerged below the outer, ground-engaging side of the tread, to later form a tread element after a thickness of the tread has been worn or otherwise removed during the life of the tire.

By virtue of employing the inventive tread features described herein, which includes selectively twisting certain sipes, as discussed herein, a reduction in tread wear is achieved. These improvements were realized with on-vehicle testing, where a test driver compared different tires each characterized as having sipes twisted by 18 degrees and 0 degrees, respectively. The tests were conducted on a front-wheel compact car on a wear circuit approximating typical driving conditions. Upon comparing the front tires from each test, the tires having sipes twisted by 18 degrees achieved a 15% wear improvement over the tires having sipes that were not twisted.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (i.e., not required) feature of the invention. Ranges that are described as being "between a and b" are inclusive of the values for "a" and "b" unless otherwise specified.

While this invention has been described with reference to particular embodiments thereof, it shall be understood that such description is by way of illustration only and should not be construed as limiting the scope of the claimed invention. Accordingly, the scope and content of the invention are to be defined only by the terms of the following claims. Furthermore, it is understood that the features of any specific embodiment discussed herein may be combined with one or more features of any one or more embodiments otherwise discussed or contemplated herein unless otherwise stated.

## Claims

1. A tire tread (10) comprising:
a length (L₁₀) extending in a lengthwise direction, the lengthwise direction being a circumferential direction when the tread (10) is arranged on a tire;
a width (W₁₀) extending in a lateral direction, the lateral direction being perpendicular to the lengthwise direction;
a thickness (T₁₀) extending in a depthwise direction from an outer, ground-engaging side of the tread (10), the depthwise direction being perpendicular to both the lengthwise direction and the widthwise direction of the tread (10); and
a sipe (18) having a length (L₁₈), a height (H₁₈), a width (W₁₈), a thickness (T₁₈) extending in a direction of the sipe width (W₁₈), and a cross-section (X₁₈) taken along a plane extending in a direction of the sipe width (W₁₈) and height (H₁₈), where the cross-section (X₁₈) twists as the sipe thickness (T₁₈) extends along the length (L₁₈) of the sipe (18),
**characterized in that** the sipe length (L₁₈) is defined by two distal ends (20), where at least one of the distal ends (20) includes an upright void feature (30) having a length extending primarily in the direction of the sipe height (H₁₈), where the sipe thickness (T₁₈) between the distal ends (20) includes an intermediate sipe portion (22), the upright void feature (30) having a thickness (T₃₂) greater than the intermediate sipe portion (22).

2. The tire tread (10) of claim 1, where the cross-section (X₁₈) twists at varying angles (α) of inclination relative a reference line (REF) extending in the direction of the sipe height (H₁₈).

3. The tire tread (10) of claim 2, where the cross-section (X₁₈) twists at angles (α) between zero and 18 degrees from the reference line (REF).

4. The tire tread (10) of claim 2, where the cross-section (X₁₈) twists at angles (α) between zero and at least 18 degrees from the reference line (REF).

5. The tire tread (10) of any one of claims 1 to 4, where the thickness (T₁₈) of the sipe (18) undulates back and forth in a direction of the sipe width (W₁₈) as the sipe (18) extends in the direction of the sipe length (L₁₈) and/or height (H₁₈).

6. The tire tread (10) of any one of claims 1 to 5, wherein the upright void features (30) are at least 0.4 mm thick and the intermediate sipe portion (22) is less than 0.4 mm thick or less.

7. The tire tread (10) of any one of claims 1 to 6, where an intermediate upright void feature (32) is arranged along the intermediate sipe portion (22) between the distal ends (22), the intermediate upright void feature (32) having a thickness (T₃₂) greater than the intermediate sipe portion (22).

8. The tire tread (10) of claim 7, where the intermediate upright void feature (32) has a thickness (T₃₂) of at least 0.4 mm.

9. The tire tread (10) of any one of claims 1 to 8, where the sipe (18) includes a submerged groove (50) arranged along a bottom of the sipe (18), the submerged groove (50) having a length extending a non-linear path in the direction of the sipe length (L₁₈).

10. The tire tread (10) of claim 9, where the submerged groove (50) has a thickness (T₅₀) greater than the thickness (T₃₂) of any upright void feature (30) and intermediate void feature (32).

11. The tire tread (10) of any one of claims 1 to 9, where the one or more upright void features (30) form multiple upright void features (30) having the same length.

12. The tire tread (10) of any one of claims 1 to 10, where the thickness of the intermediate sipe portion (22) undulates back and forth in a direction of the sipe width (W₁₈) as the sipe (18) extends in the direction of the sipe length (L₁₈) and/or height (H₁₈).

13. The tire tread (10) of any one of claims 1 to 12, where the sipe (18) has a variable thickness (T₁₈).

14. The tire tread (10) of any one of claims 1 to 13, where the cross-section (X₁₈) of the sipe (18) has a centerline (CL_{X}) and the cross-section (X₁₈) of the sipe (18) is asymmetrical relative the centerline (CL_{X}).

15. A method of forming a tire tread (10), the tread (10) having: a length (L₁₀) extending in a lengthwise direction, the lengthwise direction being a circumferential direction when the tread (10) is arranged on a tire; a width (W₁₀) extending in a lateral direction, the lateral direction being perpendicular to the lengthwise direction; and, a thickness (T₁₀) extending in a depthwise direction from an outer, ground-engaging side of the tread (10), the depthwise direction being perpendicular to both the lengthwise direction and the widthwise direction of the tread (10), the method comprising the step of:
molding into the tread (10) a sipe (18), the sipe (18) having a length (L₁₈), a height (H₁₈), a width (W₁₈), a thickness (T₁₈) extending in a direction of the sipe width (W₁₈), and a cross-section (X₁₈) taken along a plane extending in a direction of the sipe width (W₁₈) and height (H₁₈), where the cross-section (X₁₈) twists as the sipe thickness (T₁₈) extends along the length (L₁₈) of the sipe (18),
**characterized in that** the sipe length (L₁₈) is defined by two distal ends (20), where at least one of the distal ends (20) includes an upright void feature (30) having a length extending primarily in the direction of the sipe height (H₁₈), where the sipe thickness (T₁₈) between the distal ends (20) includes an intermediate sipe portion (22), the upright void feature (30) having a thickness (T₃₂) greater than the intermediate sipe portion (22).

## Patentansprüche

1. Reifenlauffläche (10), umfassend:
eine Länge (L₁₀), die sich in Längsrichtung erstreckt, wobei die Längsrichtung eine Umfangsrichtung ist, wenn die Lauffläche (10) auf einem Reifen angeordnet ist:
eine Breite (W₁₀), die sich in einer seitlichen Richtung erstreckt, wobei die seitliche Richtung senkrecht zur Längsrichtung ist;
eine Dicke (T₁₀), die sich in einer Tiefenrichtung von einer äußeren, bodenberührenden Seite der Lauffläche (10) erstreckt, wobei die Tiefenrichtung senkrecht sowohl zur Längsrichtung als auch zur Breitenrichtung der Lauffläche (10) ist; und
eine Lamelle (18), die eine Länge (L₁₈), eine Höhe (H₁₈), eine Breite (W₁₈), eine Dicke (T₁₈) hat, die sich in einer Richtung der Lamellenbreite (W₁₈) erstreckt, und einen Querschnitt (X₁₈), der entlang einer Ebene gelegt wird, die sich in einer Richtung der Lamellenbreite (W₁₈) und Höhe (H₁₈) erstreckt, wobei der Querschnitt (X₁₈) sich verdreht, wenn die Lamellendicke (T₁₈) sich entlang der Länge (L₁₈) der Lamelle (18) erstreckt,
**dadurch gekennzeichnet, dass** die Lamellenlänge (L₁₈) durch zwei distale Enden (20) festgelegt ist, wobei mindestens eines der distalen Enden (20) ein senkrechtes Hohlraum-Feature (30) umfasst, das eine Länge hat, die sich primär in der Richtung der Lamellenhöhe (H₁₈) erstreckt, wobei die Lamellendicke (T₁₈) zwischen den distalen Enden (20) einen intermediären Lamellenteil (22) umfasst, wobei das senkrechte Hohlraum-Feature (30) eine Dicke (T₃₂) hat, die größer als der intermediäre Lamellenteil (22) ist.

2. Reifenlauffläche (10) nach Anspruch 1, wobei sich der Querschnitt (X₁₈) unter verschiedenen Neigungswinkeln (a) gegenüber einer Referenzlinie (REF) verdreht, die sich in der Richtung der Lamellenhöhe (H₁₈) erstreckt.

3. Reifenlauffläche (10) nach Anspruch 2, wobei sich der Querschnitt (X₁₈) unter Winkeln (a) zwischen null und 18 Grad gegenüber der Referenzlinie (REF) verdreht.

4. Reifenlauffläche (10) nach Anspruch 2, wobei sich der Querschnitt (X₁₈) unter Winkeln (a) zwischen null und mindestens 18 Grad gegenüber der Referenzlinie (REF) verdreht.

5. Reifenlauffläche (10) nach einem der Ansprüche 1 bis 4, wobei die Dicke (T₁₈) der Lamelle (18) wellenförmig vor und zurück in einer Richtung der Lamellenbreite (W₁₈) verläuft, wenn sich die Lamelle (18) in der Richtung der Lamellenlänge (L₁₈) und/oder -höhe (H₁₈) erstreckt.

6. Reifenlauffläche (10) nach einem der Ansprüche 1 bis 5, wobei die senkrechten Hohlraumfeatures (30) mindestens 0,4 mm dick sind, und der intermediäre Lamellenteil (22) ist weniger als 0,4 mm dick oder darunter.

7. Reifenlauffläche (10) nach einem der Ansprüche 1 bis 6, wobei ein intermediäres senkrechtes Hohlraumfeature (32) entlang des intermediären Lamellenteils (22) zwischen den distalen Enden (22) angeordnet ist, wobei das intermediäre senkrechte Hohlraumfeature (32) eine Dicke (T₃₂) hat, die größer als der intermediäre Lamellenteil (22) ist.

8. Reifenlauffläche (10) nach Anspruch 7, wobei das intermediäre senkrechte Hohlraumfeature (32) eine Dicke (T₃₂) von mindestens 0,4 mm hat.

9. Reifenlauffläche (10) nach einem der Ansprüche 1 bis 8, wobei die Lamelle (18) eine getauchte Nut (50) umfasst, die entlang des Bodens der Lamelle (18) angeordnet ist, wobei die getauchte Nut (50) eine Länge hat, die sich über einen nichtlinearen Pfad in der Richtung der Lamellenlänge (L₁₈) erstreckt.

10. Reifenlauffläche (10) nach Anspruch 9, wobei die getauchte Nut (50) eine Dicke (T₅₀) hat, die größer als die Dicke (T₃₂) eines senkrechten Hohlraumfeatures (30) und intermediären Hohlraumfeatures (32) ist.

11. Reifenlauffläche (10) nach einem der Ansprüche 1 bis 9, wobei das eine oder mehr senkrechte Hohlraumfeatures (30) mehrere senkrechte Hohlraumfeatures (30) bilden, die dieselbe Länge haben.

12. Reifenlauffläche (10) nach einem der Ansprüche 1 bis 10, wobei die Dicke des intermediären Lamellenteils (22) wellenförmig vor und zurück in einer Richtung der Lamellenbreite (W₁₈) verläuft, wenn sich die Lamelle (18) in der Richtung der Lamellenlänge (L₁₈) und/oder -höhe (H₁₈) erstreckt.

13. Reifenlauffläche (10) nach einem der Ansprüche 1 bis 12, wobei die Lamelle (18) eine variable Dicke (T₁₈) hat.

14. Reifenlauffläche (10) nach einem der Ansprüche 1 bis 13, wobei der Querschnitt (X₁₈) der Lamelle (18) eine Mittellinie (CLₓ) hat, und der Querschnitt (X₁₈) der Lamelle (18) ist relativ zur Mittellinie (CLₓ) asymmetrisch.

15. Verfahren zum Bilden einer Reifenlauffläche (10), wobei die Lauffläche (10) Folgendes hat: eine Länge (L₁₀), die sich in Längsrichtung erstreckt, wobei die Längsrichtung eine Umfangsrichtung ist, wenn die Lauffläche (10) auf einem Reifen angeordnet ist: eine Breite (W₁₀), die sich in einer seitlichen Richtung erstreckt, wobei die seitliche Richtung senkrecht zur Längsrichtung ist; und eine Dicke (T₁₀), die sich in einer Tiefenrichtung von einer äußeren, bodenberührenden Seite der Lauffläche (10) erstreckt, wobei die Tiefenrichtung senkrecht sowohl zur Längsrichtung als auch zur Breitenrichtung der Lauffläche (10) ist, wobei das Verfahren den folgenden Schritt umfasst:
in die Lauffläche (10), Formen einer Lamelle (18), wobei die Lamelle (18) eine Länge (L₁₈), eine Höhe (H₁₈), eine Breite (W₁₈), eine Dicke (T₁₈) hat, die sich in einer Richtung der Lamellenbreite (W₁₈) erstreckt, und einen Querschnitt (X₁₈), der entlang einer Ebene gelegt wird, die sich in einer Richtung der Lamellenbreite (W₁₈) und -höhe (H₁₈) erstreckt, wobei der Querschnitt (X₁₈) sich verdreht, wenn sich die Lamellendicke (T₁₈) entlang der Länge (L₁₈) der Lamelle (18) erstreckt,
**dadurch gekennzeichnet, dass** die Lamellenlänge (L₁₈) durch zwei distale Enden (20) festgelegt ist, wobei mindestens eines der distalen Enden (20) ein senkrechtes Hohlraum-Feature (30) umfasst, das eine Länge hat, die sich primär in der Richtung der Lamellenhöhe (H₁₈) erstreckt, wobei die Lamellendicke (T₁₈) zwischen den distalen Enden (20) einen intermediären Lamellenteil (22) umfasst, wobei das senkrechte Hohlraum-Feature (30) eine Dicke (T₃₂) hat, die größer als der intermediäre Lamellenteil (22) ist.

## Revendications

1. Bande de roulement de pneumatique (10) comprenant :
une longueur (L₁₀) s'étendant dans une direction de longueur, la direction de longueur étant une direction circonférentielle quand la bande de roulement (10) est agencée sur un pneumatique ;
une largeur (W₁₀) s'étendant dans une direction latérale, la direction latérale étant perpendiculaire à la direction de longueur ;
une épaisseur (T₁₀) s'étendant dans une direction de profondeur depuis un côté extérieur, venant en prise avec le sol de la bande de roulement (10), la direction de profondeur étant perpendiculaire à la fois à la direction de longueur et à la direction de largeur de la bande de roulement (10) ; et
une incision (18) ayant une longueur (L₁₈), une hauteur (H₁₈), une largeur (W₁₈), un épaisseur (T₁₈) s'étendant dans une direction de la largeur (W₁₈) d'incision, et une section transversale (X₁₈) prise le long d'un plan s'étendant dans une direction de la largeur (W₁₈) et de la hauteur (H₁₈) d'incision, dans laquelle la section transversale (X₁₈) dévie quand l'épaisseur (T₁₈) d'incision s'étend le long de la longueur (L₁₈) de l'incision (18),
**caractérisée en ce que** la longueur (L₁₈) d'incision est définie par deux extrémités distales (20), dans laquelle au moins une des extrémités distales (20) inclut un élément de vide vertical (30) ayant une longueur s'étendant primairement dans la direction de la hauteur (H₁₈) d'incision, dans laquelle l'épaisseur (T₁₈) d'incision entre les extrémités distales (20) inclut une partie d'incision intermédiaire (22), l'élément de vide vertical (30) ayant une épaisseur (T₃₂) supérieure à la partie d'incision intermédiaire (22).

2. Bande de roulement de pneumatique (10) selon la revendication 1, dans laquelle la section transversale (X₁₈) dévie à des angles (a) d'inclinaison variables relativement à une ligne de référence (REF) s'étendant dans la direction de la hauteur (H₁₈) d'incision.

3. Bande de roulement de pneumatique (10) selon la revendication 2, dans laquelle la section transversale (X₁₈) dévie à des angles (α) entre zéro et 18 degrés par rapport à la ligne de référence (REF).

4. Bande de roulement de pneumatique (10) selon la revendication 2, dans laquelle la section transversale (X₁₈) dévie à des angles (a) entre zéro et au moins 18 degrés par rapport à la ligne de référence (REF).

5. Bande de roulement de pneumatique (10) selon l'une quelconque des revendications 1 à 4, dans laquelle l'épaisseur (T₁₈) de l'incision (18) ondule dans une direction de la largeur (W₁₈) d'incision quand l'incision (18) s'étend dans la direction de la longueur (L₁₈) et/ou de la hauteur (H₁₈) d'incision.

6. Bande de roulement de pneumatique (10) selon l'une quelconque des revendications 1 à 5, dans laquelle les éléments de vide verticaux (30) ont au moins 0,4 mm d'épaisseur et la partie d'incision intermédiaire (22) a moins de 0,4 mm d'épaisseur ou moins.

7. Bande de roulement de pneumatique (10) selon l'une quelconque des revendications 1 à 6, dans laquelle un élément de vide vertical intermédiaire (32) est agencé le long de la partie d'incision intermédiaire (22) entre les extrémités distales (22), l'élément de vide vertical intermédiaire (32) ayant une épaisseur (T₃₂) supérieure à la partie d'incision intermédiaire (22).

8. Bande de roulement de pneumatique (10) selon la revendication 7, dans laquelle l'élément de vide vertical intermédiaire (32) a une épaisseur (T₃₂) d'au moins 0,4 mm.

9. Bande de roulement de pneumatique (10) selon l'une quelconque des revendications 1 à 8, dans laquelle l'incision (18) inclut une rainure immergée (50) agencée le long d'un fond de l'incision (18), la rainure immergée (50) ayant une longueur s'étendant dans un trajet non linéaire dans la direction de la longueur (L₁₈) d'incision.

10. Bande de roulement de pneumatique (10) selon la revendication 9, dans laquelle la rainure immergée (50) a une épaisseur (T₅₀) supérieure à l'épaisseur (T₃₂) de tout élément de vide vertical (30) et élément de vide vertical intermédiaire (32).

11. Bande de roulement de pneumatique (10) selon l'une quelconque des revendications 1 à 9, dans laquelle les un ou plusieurs éléments de vide verticaux (30) forment de multiples éléments de vide verticaux (30) ayant la même longueur.

12. Bande de roulement de pneumatique (10) selon l'une quelconque des revendications 1 à 10, dans laquelle l'épaisseur de la partie d'incision intermédiaire (22) ondule dans une direction de la largeur (W₁₈) d'incision quand l'incision (18) s'étend dans la direction de longueur (L₁₈) et/ou de la hauteur (H₁₈) d'incision.

13. Bande de roulement de pneumatique (10) selon l'une quelconque des revendications 1 à 12, dans laquelle l'incision (18) a une épaisseur (T₁₈) variable.

14. Bande de roulement de pneumatique (10) selon l'une quelconque des revendications 1 à 13, dans laquelle la section transversale (X₁₈) de l'incision (18) a une ligne centrale (CL_{X}) et la section transversale (X₁₈) de l'incision (18) est asymétrique relativement à la ligne centrale (CL_{X}).

15. Procédé de formation d'une bande de roulement de pneumatique (10), la bande de roulement (10) ayant : une longueur (L₁₀) s'étendant dans une direction de longueur, la direction de longueur étant une direction circonférentielle quand la bande de roulement (10) est agencée sur un pneumatique ; une largeur (W₁₀) s'étendant dans une direction latérale, la direction latérale étant perpendiculaire à la direction de longueur ; une épaisseur (T₁₀) s'étendant dans une direction de profondeur depuis un côté extérieur, venant en prise avec le sol de la bande de roulement (10), la direction de profondeur étant perpendiculaire à la fois à la direction de longueur et à la direction de largeur de la bande de roulement (10), le procédé comprenant l'étape de :
moulage dans le pneumatique (10) d'une incision (18) ayant une longueur (L₁₈), une hauteur (H₁₈), une largeur (W₁₈), un épaisseur (T₁₈) s'étendant dans une direction de la largeur (W₁₈) d'incision, et une section transversale (X₁₈) prise le long d'un plan s'étendant dans une direction de la largeur (W₁₈) et de la hauteur (H₁₈) d'incision, dans lequel la section transversale (X₁₈) dévie quand l'épaisseur (T₁₈) d'incision s'étend le long de la longueur (L₁₈) de l'incision (18),
**caractérisé en ce que** la longueur (L₁₈) d'incision est définie par deux extrémités distales (20), dans lequel au moins une des extrémités distales (20) inclut un élément de vide vertical (30) ayant une longueur s'étendant primairement dans la direction de la hauteur (H₁₈) d'incision, dans lequel l'épaisseur (T₁₈) d'incision entre les extrémités distales (20) inclut une partie d'incision intermédiaire (22), l'élément de vide vertical (30) ayant une épaisseur (T₃₂) supérieure à la partie d'incision intermédiaire (22).
